# EUROPÄISCHE PATENTSCHRIFT

(11) **EP 0 988 118 B1**
(45) Veröffentlichungstag und Bekanntmachung des Hinweises auf die Patenterteilung: **28.08.2002**
(21) Anmeldenummer: 98934825.5
(22) Anmeldetag: 29.05.1998
(51) Int. Cl.: B09C 1/10, B09C 1/00

(54) **VERFAHREN ZUR DEKONTAMINATION VON BÖDEN**
METHOD FOR DECONTAMINATING SOILS
PROCEDE DE DECONTAMINATION DE SOLS

(30) Priorität: 02.06.1997 DE 19722999
(43) Veröffentlichungstag der Anmeldung: 29.03.2000
(73) Patentinhaber: Harborth, Peter, 38104 Braunschweig (DE); Hanert, Hans Helmut, 38126 Braunschweig (DE); Kucklick, Martin, 38106 Braunschweig (DE); Waschke, Christian, 38106 Braunschweig (DE)
(72) Erfinder: Harborth, Peter, 38104 Braunschweig (DE); Hanert, Hans Helmut, 38126 Braunschweig (DE); Kucklick, Martin, 38106 Braunschweig (DE); Waschke, Christian, 38106 Braunschweig (DE)
(74) Vertreter: Lins, Edgar, Dipl.-Phys. Dr.jur.
(86) Internationale Anmeldenummer: DE9801468
(87) Internationale Veröffentlichungsnummer: WO98055241

(56) Entgegenhaltungen:
- WO-A-93/22241
- DE-C- 3 937 593
- GB-A- 2 255 556
- US-A- 5 006 250
- US-A- 5 133 625
- US-A- 5 511 907
- US-A- 5 605 634

## Beschreibung

Die Erfindung betrifft ein Verfahren zur Dekontamination kontaminierter Böden in einem zusammenhängenden Dekontaminationsfeld durch Einleitung von die autochthone Biozönose fördernden Dosierstoffen in die gesättigte Bodenzone durch Injektionsbohrungen, bei dem die Fließrichtung des Grundwassers in der gesättigten Bodenzone festgestellt wird, durch die Injektionsbohrungen ein abgeschlossener Eintrag der Dosierstoffe in einer solchen Konzentration erfolgt, dass eine wirksame Verdünnung erst mit dem Grundwasser in der gesättigten Bodenzone erreicht wird, und ein Transport der Dosierstoffe nur mit dem fließenden Grundwasser erfolgt und die Injektionsbohrungen so angelegt werden, dass im Wesentlichen das gesamte Dekontaminationsfeld mit Dosierstoffen versorgt wird.

Es ist beispielsweise durch DE 39 37 593 C1 bekannt, kontaminierte Böden in situ dadurch zu sanieren, dass Dosierstoffe in den Boden eingeleitet werden, die die dort vorhandene mikrobiologische Aktivität fördern. Hierzu wird zwischen Injektionsbohrungen und Absaugbohrungen ein im Wesentlichen geschlossener Kreislauf ausgebildet, in dem die Fließgeschwindigkeit in der Bodenzone so eingestellt wird, dass keine Auswascherscheinungen auftreten. Das bekannte Verfahren ist sehr wirksam, da kontinuiertich eine geeignete Dosierung für die Dosierstoffe eingestellt werden kann, um im Bodenbereich optimale Bedingungen für die Vermehrung der wirksamen Biomasse zu gewährleisten. Problematisch ist jedoch, dass das bekannte Verfahren ein im Wesentlichen frei zugängliches Dekontaminationsfeld voraussetzt, da die Abstände zwischen den Injektionsbohrungen und den Absaugbohrungen nicht zu groß sein dürfen, um den im Wesentlichen geschlossenen Kreislauf sicherzustellen. Für sehr ausgedehnte Kontaminationsfelder wird darüber hinaus der Aufwand sehr hoch.

Viele Kontaminatiosgebiete befinden sich im Innenstadtbereich großer Städte im Bereich dichter Bebauungen, sodass das bekannte Verfahren nicht einsetzbar ist.

Für diese Anwendungsfälle ist es bekannt, mit hydraulischen Maßnahmen eine Reduktion der Bodenkontamination vorwiegend durch Auswascheffekte herbeizuführen. Zur Vermeidung einer ungewollten Ausbreitung des Kontaminationsgebiets ist es hierfür allerdings erforderlich, das Kontaminationsgebiet wasserdicht einzugrenzen, also Spund- oder Schlitzwände oder Brunnengalerien zu setzen. Der hierfür erforderliche Aufwand ist extrem hoch. Die Sanierung eines Bodens mit hydraulischen Maßnahmen bringt das grundsätzliche Problem mit sich, dass der Schadstoffaustrag vom Boden lediglich an einen anderen Ort verlagert wird (Vorfluter oder Atmosphäre). Aus diesem Grund, insbesondere aber auch aus wirtschaftlichen Gründen, sind vielfach Sanierungsmaßnahmen in schwer zugänglichen Gebieten eingestellt worden. Dies ist gerade für die betroffenen besiedelten Innenstadtgebiete kein befriedigender Zustand, was keiner näheren Erläuterung bedarf.

Ein Verfahren der eingangs erwähnten Art ist durch US-A-5,605,634 bekannt. Zur Einbringung von Nährstoffen oder chemischen Behandlungsstoffen für eine Kontamination im Grundwasser werden Bohrungen in den Boden eingebracht, in die vom Grundwasser durchspülte Rohre eingesetzt werden. Im Innern des Rohres befindet sich eine Diffusionsleitung, aus der die Nährstoffe oder chemischen Materialien in das durch die Bohrung fließende Grundwasser diffundieren können. Zur Konstanthaltung der Konzentration der Lösung in dem Diffusionsrohr wird diese in einem Kreislauf mit Hilfe einer an der Erdoberfläche angeordneten Umwälzpumpe umgepumpt. Die Bohrungen werden senkrecht zur Fließrichtung des Grundwassers nebeneinander so nah beieinander vorgesehen, dass stromabwärts von den Bohrungen die zugegebenen Stoffe sich über die gesamte Kontaminationszone verteilt haben.

US-A-5,133,625 offenbart die Versorgung von Grundwasser mit Nährstoffen mittels einer Bohrung, die auch von einem Kraftfahrzeug aus mobil mit den Nährstoffen versorgt werden kann. Das Einbringen der Nährstoffe kann dabei mit einem Überdruck durch die Bohrung erfolgen. Eine ähnliche Anordnung ist aus US-A-5,511,907 bekannt. Die Art der Behandlung eines Kontaminationsfeldes ist dabei nicht angesprochen.

Der Erfindung liegt die Aufgabe zugrunde auch für schwer zugängliche Gebiete ein Bodensanierungsverfahren der eingangs erwähnten Art anzugeben, das eine Dekontamination auch von ausgedehnten Kontaminationsfeldern mit einem relativ geringen Aufwand und innerhalb eines vorgegebenen Zeitraumes ermöglicht.

Zur Lösung dieser Aufgabe ist erfindungsgemäß das Verfahren der eingangs erwähnte Art dadurch gekennzeichnet, dass die Fließgeschwindigkeit des Grundwassers in der gesättigten Bodenzone festgestellt wird und dass die Injektionssbohrungen mit die Fließgeschwindigkeit des Grundwassers berücksichtigenden Abständen in Fließrichtung so angelegt werden, dass in einem vorgegebenen Zeitraum die Versorgung des gesamten Dekontaminationsfeldes stattfindet. Die die Biozönose fördernde Verdünnung der Dosierstoffe stellt sich dabei erst im Grundwasserbereich ein und wird mit dem fließenden Grundwasser durch die gesättigte Bodenzone transportiert. Übliche Fließgeschwindigkeiten von Grundwasser betragen beispielsweise 30 bis 100 m pro Jahr, sodass für einen angenommenen Zeitraum von 2 Jahren nächste Injektionsbohrungen in einem Abstand von 60 bis 200 m in Fließrichtung des Grundwassers angeordnet werden, um so zu einer flächendeckenden Verteilung der Dosierstoffe zu gelangen. Der Abstand der Injektionsbohrungen quer zur Fließrichtung des Grundwassers hängt von der jeweiligen Durchlässigkeit des Bodens ab, da diese die seitliche Ausbreitung der Dosierstoffe bestimmt.

Das erfindungsgemäße Verfahren benötigt somit lediglich ein Raster von Injektionsbohrungen, wobei die regelmäßig zahlreich vorhandenen Grundwasserbrunnen als Injektionsbohrungen ausgenutzt werden können, da die Einbringung der Dosierstoffe jeweils eine abgeschlossene Maßnahme darstellt, nach der die Injektionsbohrung ggf. über viele Monate für das erfindungsgemäße Verfahren nicht mehr benutzt wird.

Besonders zweckmäßig ist es, wenn die erfindungsgemäße Einbringung der Dosierstoffe durch die Injektionsbohrungen mit einer mobilen Dosierstation vorgenommen wird, mit der die Injektionsbohrungen nacheinander abgefahren werden, um die Dosierstoffe in den Boden zu bringen.

Die Einbringung der Dosierstoffe kann durch Überdruck vorgenommen werden, indem die Injektionsbohrung auf der Oberseite abgeschlossen wird und die Lösung mit den Dosierstoffen in die Bohrung eingepresst wird. Hierzu ist es besonders vorteilhaft, wenn sich in der Injektionsbohrung ein Filterrohr mit Durchgangsöffnungen in den Mantelwänden befindet.

In einer alternativen Ausführungsform des Verfahrens werden in die Injektionsbohrungen eine Mehrzahl von mit den hochkonzentrierten Dosierstoffen gefüllte Depotbehältern über die Tiefe der gesättigten Bodenzone voneinander beabstandet eingebracht, wobei die Depotbehälter so ausgebildet sind, daß über einen längeren Zeitraum hochkonzentrierte Dosierstofflösungen in die gesättigte Bodenzone abgegeben werden. Unter Beibehaltung des erfindungsgemäßen Verfahrens, die Dosierstoffe hochkonzentriert in die Bodenzone einzubringen und die wirksame Konzentration erst durch Verdünnung mit dem Grundwasser herzustellen, hat die Verwendung von Depotbehältern den Vorteil, daß die hochdosierte Abgabe der Dosierstoffe über einen längeren Zeitraum erfolgen kann, wodurch eine stärkere Verbreitung und erhöhte Wirksamkeit erzielt wird. Die Vorratsbehälter können übliche hohle Behälter sein, aus denen die Dosierstoffe nur langsam austreten können, beispielsweise durch poröse Wände oder Austrittsöffnungen mit einem hohen Strömungswiderstand. Die Vorratsbehälter können aber auch mit den Dosierstoffen gesättigte Adsorber sein, also beispielsweise aus Aktivkohle, Adsorberharzen oder -gelen bestehen.

Da das erfindungsgemäße Verfahren kein Abpumpen von Wasser aus der gesättigten Bodenzone vorsieht, besteht nicht die Möglichkeit, durch Untersuchung des abgepumpten Wassers die biologische in situ-Aktivität zu überprüfen. Um eine derartige Überprüfung zumindest stichprobenartig vornehmen zu können, kann es zweckmäßig sein, Kontrollbohrungen zur Überprüfung der biologischen Aktivität im durchströmten Bereich bezüglich der Fließrichtung des Grundwasser stromabwärts von Injektionsbohrungen einzubringen. Durch die Kontrollbohrungen kann festgestellt werden, ob die Dosierstoffe den Ort der Kontrollbohrungen erreichen, wenn die Dosierstoffe, beispielsweise durch Farbe, fluoreszierende oder radioaktive Stoffe markiert worden sind. Eine besonders vorteilhafte Überprüfung der biologischen Aktivität kann dadurch vorgenommen werden, daß in der Kontrollbohrung die quantitative Differenz von Kationen und Anionen des eingebrachten Dosiermittels bestimmt wird. Wird beispielsweise eine Nitratzufuhr durch Kaliumnitrat als Dosierstoff vorgenommen, kann der Nitratverbrauch durch aktive Mikroorganismen dadurch bestimmt werden, daß an der Kontrollbohrung die Menge der Kaliumionen und die Menge der Nitrationen bestimmt wird. Ist die Menge gleich, hat keine biologische Aktivität stattgefunden. Ein großer Überschuß an Kaliumionen zeigt hingegen an, daß aktive Mikroorganismen einen großen Teil der Nitrationen verbraucht haben.

Die Erfindung soll im folgenden anhand von in der Zeichnung dargestellten Ausführungsbeispielen näher erläutert werden. Es zeigen:
- Figur 1 -: eine schematische Darstellung der Einbringung eines Dosierstoffes über eine Injektionsbohrung mit Hilfe einer mobilen Dosierstation,
- Figur 2 -: eine schematische Darstellung der Einbringung von Dosierstoffen mit Depotbehältern, wobei zwei Phasen der Einbringung dargestellt sind,
- Figur 3 -: eine beispielhafte kartografische Darstellung eines Dekontaminationsfeldes mit Angabe der Strömungsrichtung des Grundwassers und der sich hieraus ergebenden Anordnung von Injektionsbohrungen.

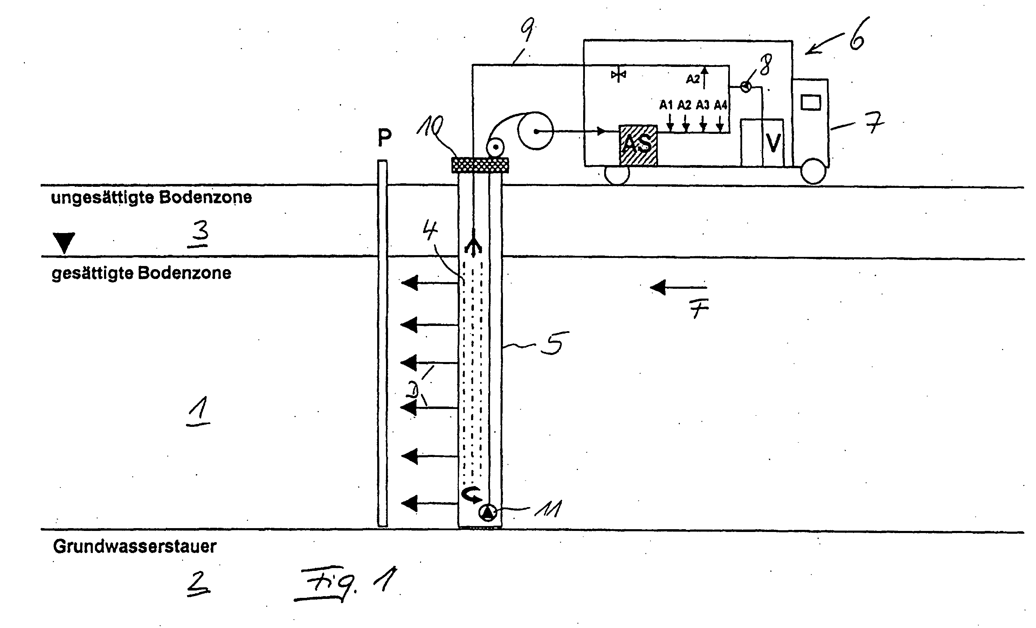

In Figur 1 ist eine grundwasserführende, gesättigte Bodenzone 1 zwischen einem wasserundurchlässigen Grundwasserstauer 2 und einer zur Bodenoberfläche ragenden ungesättigten Bodenzone 3 dargestellt. Zur Einbringung eines Dosierstoffes 4 dient eine Injektionsbohrung 5, die sich im wesentlichen bis über die gesamte Tiefe der gesättigten Bodenzone erstreckt. Zur Einbringung der Dosierstoffe 4 in die Injektionsbohrung 5 dient eine mobile Dosierstation 6, die aus einem Kleinlastfahrzeug 7 mit einem (nicht dargestellten) großen Vorratstank für Wasser besteht. Im Ladebereich des Fahrzeugs 7 dient eine Dosiereinheit V zur Herstellung der benötigten Konzentration des Dosierstoffes, der über eine Pumpe 8 in eine Leitung 9 gepumpt wird, die durch einen oberen Abschluß 10 der Injektionsbohrung 5 in diese etwa bis in den Bereich der gesättigten Bodenzone hineinragt. Der Dosierstoff 4 wird unter dem Überdruck der Pumpe 8 in die Injektionsbohrung 5 eingepreßt und tritt in die gesättigte Bodenzone 1 ein. Figur 1 zeigt mit dem Pfeil F die Fließrichtung des Grundwassers in der gesättigten Bodenzone 1, so daß die Dosierstoffe 4 entsprechend der Fließrichtung F in der gesättigten Bodenzone 1 von der Injektionsbohrung 5 wegtransportiert werden, wie dies durch Pfeile D angedeutet ist.

Im unteren Bereich der Infiltrationsbohrung 5 kann eine Pumpe 11 angeordnet sein, mit der aus dem Bereich der Infiltrationsbohrung 5 Wasserproben an die Oberfläche gepumpt werden, um beispielsweise in der hierfür eingerichteten Dosierstation 6 in einer Meßanordnung AS auf verschiedene Parameter wie Leitfähigkeit, Sauerstoffgehalt, Gehalt an Elektrodenakzeptoren (z.B. Nitrat/Nitrit), Gehalte an Elektroden Donatoren (z.B. Ethanol) usw. untersucht werden, um hieraus Informationen über die biologische Aktivität im Boden zu erlangen. Diese Überprüfung muß nicht zeitlich mit der Einbringung der Dosierstoffe 4 in Verbindung stehen, sondern kann beispielsweise einige Wochen nach der Einbringung der Dosierstoffe 4 in die gesättigte Bodenzone 1 erfolgen.

Figur 1 läßt stromabwärts von der Injektionsbohrung 5 eine Kontrollbohrung P erkennen, mit der eine Überprüfung der biologischen Aktivität aufgrund der in die Injektionsbohrung 5 eingebrachten Dosierstoffe vorgenommen werden kann.

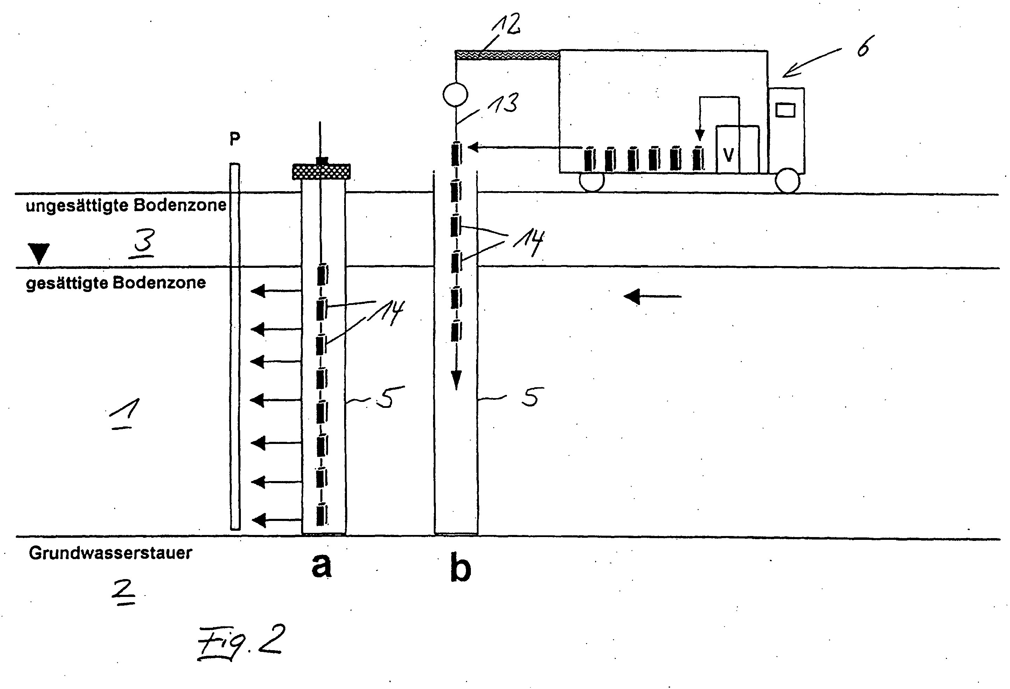

Das in Figur 2 dargestellte Ausführungsbeispiel sieht eine mobile Dosierstation 6 vor, an der ein Ausleger 12 befestigt ist mit dem an einer Kette 13 untereinander aufgereihte Depotbehälter 14 in die Injektionsbohrung 5 absenkbar sind. Die Depotbehälter sind mit dem Dosierstoff gefüllt, sei es als Hohlbehälter oder als Adsorber, so daß sie eine hochkonzentrierte Lösung des Dosierstoffs im Kontakt mit dem Grundwasser langsam abgeben.

In der in Figur 2 dargestellten Phase b ist das Absenken und Aufnehmen von in der Dosierstation 6 gefüllten Depotbehältern 14 dargestellt, während die Phase a die abgesenkten Depotbehälter 14 zeigt.

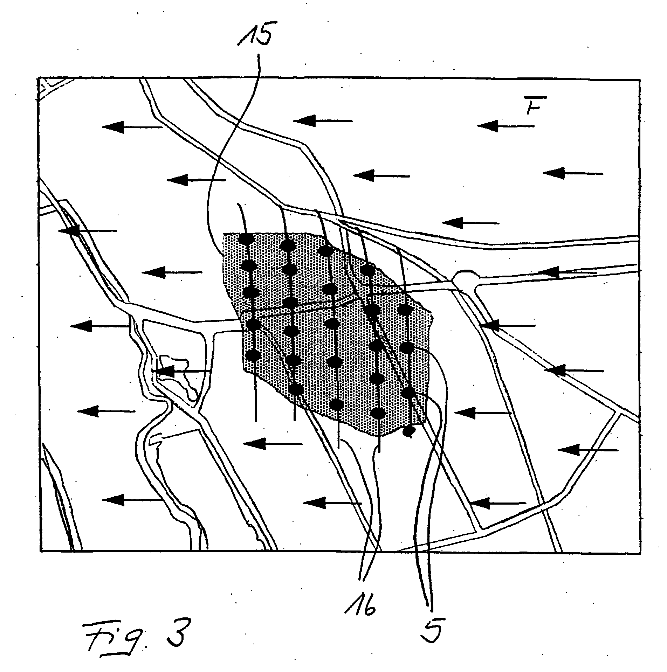

Figur 3 zeigt eine schematische Darstellung eines Dekontaminationsfeldes 15 mit seiner Umgebung, wobei die Strömungsrichtung des Grundwassers mit Pfeilen F dargestellt ist.

Entsprechend der festgestellten bzw. abgeschätzten Strömungsgeschwindigkeit des Grundwassers sind im wesentlichen senkrecht zur Strömungsrichtung Injektionsbrunnen 5 nebeneinander angeordnet, wobei die Anordnung so erfolgt, daß sich in Strömungsrichtung F gesehen hintereinander Injektionswellen aufbauen, die durch die Injektionsbrunnen 5 verbindende Linien 16 dargestellt sind.

Der Abstand der Injektionsbrunnen 5 in Strömungsrichtung F ist so gewählt, daß nach einem vorgegebenen Zeitraum, von beispielsweise 2 Jahren, der in einen Injektionsbrunnen 5 eingebrachte Dosierstoff den Bereich des in Strömungsrichtung F folgenden Dosierbrunnens 5 der nächsten Injektionswelle 16 erreicht hat, so daß nach dem genannten Zeitraum das gesamte Dekontaminationsgebiet 15 von Dosierstoff erfaßt sind.

Als Dosierstoff kommen insbesondere Elektronenakzeptoren (O₂, NO₃⁻, SO₄⁻ u.ä.), aber auch Elektronendonatoren (Ethanol, Lactat, Methanol, Methan u.ä.) in Frage. Im Einzelfall sind auch Zudosierungen von Nährstoffen (Stickstoff, Phosphor, Kalium usw.) denkbar.

## Patentansprüche

1. Verfahren zur Dekontamination kontaminierter Böden in einem zusammenhängenden Dekontaminationsfeld (15) durch Einleitung von die autochthone Biozönose fördernden Dosierstoffen (4) in die gesättigte Bodenzone (1) durch Injektionsbohrungen (5), bei dem die Fließrichtung (F) des Grundwassers in der gesättigten Bodenzone (1) festgestellt wird, durch die Injektionsbohrungen (5) ein abgeschlossener Eintrag der Dosierstoffe (4) in einer solchen Konzentration erfolgt, dass eine wirksame Verdünnung erst mit dem Grundwasser in der gesättigten Bodenzone (1) erreicht wird, und ein Transport der Dosierstoffe (4) nur mit dem fließenden Grundwasser erfolgt und die Injektionsbohrungen (5) so angelegt werden, dass im Wesentlichen das gesamte Dekontaminationsfeld (15) mit Dosierstoffen (4) versorgt wird, **dadurch gekennzeichnet, dass** die Fließgeschwindigkeit des Grundwassers in der gesättigten Bodenzone (1) festgestellt wird und dass die Injektionssbohrungen (5) mit die Fließgeschwindigkeit des Grundwassers berücksichtigenden Abständen in Fließrichtung (F) so angelegt werden, dass in einem vorgegebenen Zeitraum die Versorgung des gesamten Dekontaminationsfeldes stattfindet.

2. Verfahren nach Anspruch 1, **dadurch gekennzeichnet, dass** die Einbringung der Dosierstoffe (4) durch die Injektionsbohrungen (5) mit einer mobilen Dosierstation (6) vorgenommen wird.

3. Verfahren nach Anspruch 1 oder 2, **dadurch gekennzeichnet, dass** die Einbringung der Dosierstoffe (4), vorzugsweise durch Filterrohre, in den Injektionsbohrungen (5) unter Überdruck vorgenommen wird.

4. Verfahren nach einem der Ansprüche 1 bis 3, **dadurch gekennzeichnet, daß** in die Injektionsbohrungen (5) eine Mehrzahl von mit den hochkonzentrierten Dosierstoffen (4) gefüllten Depotbehältern (14) über die Tiefe der gesättigten Bodenzone (1) voneinander beabstandet eingebracht werden, die so ausgebildet sind, daß über einen längeren Zeitraum hochkonzentrierte Dosierstofflösungen in die gesättigte Bodenzone (1) abgegeben werden.

5. Verfahren nach Anspruch 4, **dadurch gekennzeichnet, daß** die Depotbehälter (14) aus mit den Dosierstoffen (4) gesättigten Adsorbern bestehen.

6. Verfahren nach einem der Ansprüche 1 bis 5, **dadurch gekennzeichnet, daß** bezüglich der Flußrichtung (F) des Grundwassers stromabwärts von Injektionsbohrungen (5) Kontrollbohrungen (P) zur Überprüfung der biologischen Aktivität im durchströmten Bereich eingebracht werden.

7. Verfahren nach einem der Ansprüche 1 bis 6, **dadurch gekennzeichnet, daß** die biologische Aktivität durch Feststellung einer quantitativen Differenz von Kationen und Anionen des eingebrachten Dosierstoffes (4) bestimmt wird.

## Claims

1. A method for decontaminating contaminated soils in a continuous decontamination area (15) by introducing metered substances (4) which promote autochthonous biocoenosis into the saturated soil zone (1) through injection holes (5), in which method the flow direction (F) of the groundwater in the saturated soil zone (1) is ascertained, delimited input of the metered substances (4) proceeds through the injection holes (5) in such a concentration that effective dilution is only achieved with the groundwater in the saturated soil zone (1) and transport of the metered substances (4) proceeds only with the flowing groundwater and the injection holes (5) are so laid out that substantially the entire decontamination area (15) is supplied with metered substances (4), **characterised in that** the flow rate of the groundwater in the saturated soil zone (1) is ascertained and **in that** the injection holes (5) are laid out spaced in the flow direction (F) to take account of the flow rate of the ground water in such a way that the entire decontamination area is supplied in a given period.

2. A method according to claim 1, **characterised in that** the metered substances (4) are introduced through the injection holes (5) using a mobile metering station (6).

3. A method according to claim 1 or claim 2, **characterised in that** the metered substances (4) are introduced into the injection holes preferably by filter pipes under excess pressure.

4. A method according to one of claims 1 to 3, **characterised in that** a plurality of controlled release vessels (14) filled with the highly concentrated metered substances (4) are introduced into the injection holes (5) so as to be spaced from one another over the depth of the saturated soil zone (1), said controlled release vessels being so constructed that highly concentrated metered substance solutions are discharged into the saturated soil zone (1) over an extended period.

5. A method according to claim 4, **characterised in that** the controlled release vessels (14) consist of adsorbers saturated with the metered substances (4).

6. A method according to one of claims 1 to 5, **characterised in that** inspection holes (P) are introduced downstream of the injection holes (5) relative to the flow direction (F) of the groundwater for monitoring the biological activity in the area through which the groundwater flows.

7. A method according to one of claims 1 to 6, **characterised in that** the biological activity is determined by ascertaining a quantitative difference between cations and anions in the metered substance (4) introduced.

## Revendications

1. Procédé pour décontaminer des sols contaminés dans un champ de décontamination (15) d'un seul tenant, en introduisant via des forages d'injection (5) des substances de dosage (4) favorisant la biocénose autochtone dans la zone saturée (1) du sol, procédé dans lequel on détermine la direction d'écoulement (F) de l'eau souterraine dans la zone saturée du sol (1), un apport voulu de substances de dosage (4) a lieu via les forages d'injection (5) dans une concentration telle qu'une dilution effective n'est obtenue qu'avec l'eau souterraine dans la zone saturée du sol (1), et un transport des substances de dosage (4) n'a lieu qu'avec l'eau souterraine en écoulement, et les forages d'injection (5) sont disposés de façon que sensiblement tout le champ de décontamination (15) est alimenté en substances de dosage (4), **caractérisé en ce qu'**on détermine la vitesse d'écoulement de l'eau souterraine dans la zone saturée du sol (1), et **en ce que** les forages d'injection (5) sont disposés avec, dans la direction d'écoulement (F), des distances qui prennent en considération la vitesse d'écoulement de l'eau souterraine de façon que la totalité du champ de décontamination soit alimentée en une durée pré-déterminée.

2. Procédé selon la revendication 1, **caractérisé en ce que** l'apport des substances de dosage (4) est effectué via les forages d'injection (5) avec une station de dosage mobile (6).

3. Procédé selon la revendication 1 ou 2, **caractérisé en ce que** l'apport des substances de dosage (4) dans les forages d'injection (5) est effectué sous une surpression, de préférence par l'intermédiaire de tuyaux-filtres.

4. Procédé selon l'une des revendications 1 à 3, **caractérisé en ce qu'**on introduit dans les forages d'injection (5) plusieurs récipients de dépôt (14) remplis des substances de dosage (4) fortement concentrées, à distance les uns des autres sur la hauteur de la zone saturée du sol (1), ces récipients de dépôt étant agencés de façon que des solutions de substances de dosage fortement concentrées sont émises dans la zone saturée du sol (1) sur une durée relativement longue.

5. Procédé selon la revendication 4, **caractérisé en ce que** les récipients de dépôt (14) consistent en des adsorbeurs saturés avec les substances de dosage (4).

6. Procédé selon l'une des revendications 1 à 5, **caractérisé en ce qu'**en aval de forages d'injection (5) relativement à la direction d'écoulement (F) de l'eau souterraine, on met en place des forages de contrôle (P) pour contrôler l'activité biologique dans le domaine subissant l'écoulement.

7. Procédé selon l'une des revendications 1 à 6, **caractérisé en ce qu'**on détermine l'activité biologique par constatation d'une différence quantitative de cations et d'anions de la substance de dosage (4) apportée.
